# EUROPÄISCHE PATENTSCHRIFT

(11) **EP 3 166 770 B1**
(45) Veröffentlichungstag und Bekanntmachung des Hinweises auf die Patenterteilung: **08.04.2020**
(21) Anmeldenummer: 15736479.5
(22) Anmeldetag: 09.07.2015
(51) Int. Cl.: B29C 48/585, B29C 48/56, B29C 48/55, B29C 48/59, B29C 48/405, B29B 7/48, B29C 48/54

(54) **MISCHELEMENTE MIT VERBESSERTER DISPERGIERWIRKUNG**
MIXING ELEMENTS WITH IMPROVED DISPERSANT EFFECT
ÉLÉMENTS COMPOSÉ À POUVOIR DISPERSANT AMÉLIORÉ

(30) Priorität: 11.07.2014 EP 14176663
(43) Veröffentlichungstag der Anmeldung: 17.05.2017
(73) Patentinhaber: Covestro Deutschland AG, 51373 Leverkusen (DE)
(72) Erfinder: BIERDEL, Michael, 51373 Leverkusen (DE); KÖNIG, Thomas, 51375 Leverkusen (DE)
(74) Vertreter: Levpat
(86) Internationale Anmeldenummer: PCT/EP2015/065705
(87) Internationale Veröffentlichungsnummer: WO 2016/005498

(56) Entgegenhaltungen:
- EP-A1- 0 537 450
- WO-A1-2009/051279
- DE-A1-102007 055 764
- DE-A1-102009 057 139
- JP-A- 2001 310 369
- JP-A- 2011 063 015
- JP-A- 2012 213 996

## Beschreibung

Die Erfindung betrifft Mischelemente mit einer erhöhten Anzahl an Basisgeometrieperioden pro Längenabschnitt und einer verbesserten Dispergierwirkung für mehrwellige Schneckenextruder mit paarweise gleichsinnig drehenden Schneckenwellen. Die Erfindung betrifft ferner die Verwendung der Mischelemente in mehrwelligen Schneckenextrudern, einen entsprechenden Schneckenextruder enthaltend die Mischelemente sowie ein Verfahren zur Extrusion plastischer Massen.

Gleichsinnig drehende, mehrwellige Schneckenextruder sind bereits seit langem bekannt. Einen umfassenden Überblick über solche Schneckenextruder gibt die folgende Veröffentlichung [1] = Kohlgrüber: Der gleichläufige Doppelschneckenextruder. Hanser Verlag, München, 2007. Moderne Schneckenextruder verfügen über ein Baukastensystem, bei dem verschiedene Schneckenelemente auf einer Kernwelle aufgezogen werden können. Hiermit kann der Fachmann den Schneckenextruder an die jeweilige Verfahrensaufgabe anpassen. Dabei können Förderelemente, Knetelemente und/oder Mischelemente eingesetzt und miteinander kombiniert werden.

So offenbart DE 10 2007 055764 A1 eine Schnecke für einen Doppelschneckenextruder mit einem Schneckenhauptkörper, der durch Kombination einer Vielzahl an Segmenten miteinander in der Axialrichtung ausgebildet ist. Der Schneckenhauptkörper hat mehrere Abschnitte in Axialrichtung, die verschiedene Funktionen ausüben: ein Förderabschnitt zum Fördern des knetenden Materials, ein Knetabschnitt zum Kneten des zu knetenden Materials und ein Extrudierabschnitt zum Druckbeaufschlagen und Extrudieren des zu knetenden Materials.

Eine der wesentlichen Aufgaben, die auf mehrwelligen Schneckenextruder durchgeführt werden, ist das Dispergieren von flüssigen Phasen oder flüssigen Additiven in Polymerschmelzen, die nicht homogen ineinander mischbar sind oder das Dispergieren von Feststoffen in Polymerschmelzen.

Eine weitere wesentliche Aufgabe, die auf mehrwelligen Schneckenextruder durchgeführt wird, ist das Dispergieren einer gasförmigen Phase in einer Polymerschmelze. In einem sogenannten Entgasungsextruder dient eine gasförmige Phase als Schleppmittel in einer der Dispergierzone nachgeschalteten Entgasungszone. Das Schleppmittel führt zum einen zu einem (verbesserten) Aufschäumen der Polymerschmelze mit entsprechend größeren freien Entgasungsoberflächen und zum anderen zu einer Partialdruckerniedrigung der zu entgasenden Flüchtigen (Monomere, Oligomere, Lösungsmittel). Als Schleppmittel sind beispielsweise Wasser, Kohlendioxid oder Stickstoff bekannt.

Die Qualität der Dispergierung beeinflusst in vielfältiger Weise das Betriebsverhalten eines Schneckenextruders. Eine schlechte Dispergierung von gasförmigen, flüssigen oder festen Additiven reduziert die Produktqualität durch Inhomogenitäten innerhalb der plastischen Massen. Eine schlechte Dispergierung eines Schleppmittels in der Dispergierzone führt zusätzlich dazu, dass in einer der Dispergierzone nachgeschalteten Entgasungszone die Entgasungsleistung sinkt und damit unter Umständen die geforderten Restgehalte an Monomeren, Oligomeren und Lösungsmitteln in der plastischen Masse nicht mehr erreicht werden.

Einer schlechten Dispergierung kann entgegengewirkt werden durch eine Erhöhung der Drehzahl oder durch eine Verringerung des Durchsatzes. Beide Maßnahmen haben den Nachteil, dass sich dadurch die Temperatur der im Schneckenextruder verarbeiteten plastischen Masse erhöht und damit die Produktqualität durch eine erhöhte Schädigungskinetik sinkt.

Aus der DE 41 34 026 A1 sind Mischelemente bekannt, die sich zum Dispergieren von Füllstoffen und Flüssigadditiven in Polymerschmelzen eignen. Diese Mischelemente basieren hinsichtlich ihrer Geometrie auf einem rückfördernden, eingängigen Förderelement mit Erdmenger-Profil und weisen in ihren Kammreihen förderaktive Nuten auf. Derartige Mischelemente sind dem Fachmann als Zahnmischelemente (ZME) bekannt.

In der DE 41 34 026 A1 werden Zahnmischelemente offenbart, bei denen die Steigung der Basisgeometrie das 0,2 bis 0,35 fache des Außendurchmessers des Zahnmischelements beträgt, wobei unter der Steigung die axiale Länge verstanden wird, die für eine vollständige Drehung des Schneckenprofils erforderlich ist. Die Steigung der Nuten wird mit dem 2,5- bis 6- fachen des Außendurchmessers des Zahnmischelements angegeben.

Aus der JP 2001 310369 A sind Zahnmischelemente bekannt, bei denen die Steigung der Basisgeometrie das 0,1 bis 0,5-fache des Außendurchmessers des Zahnmischelements beträgt.

JP 2012 213996 A offenbart Zahnmischelemente, bei denen die Steigung der Basisgeometrie das 0,1 bis 0,3-fache des Außendurchmessers des Zahnmischelements beträgt.

WO 2009/051279 A1 offenbart Mischelemente, bei denen die Steigung der Basisgeometrie das 0,50 bis 1,50-fache des Außendurchmessers beträgt. Die Mischelemente weisen 10 bis 30 Nuten pro Basisgeometrieperiode auf.

Auch die DE 10 2009 057 139 A1 offenbart Mischelemente die ein Schneckenprofil nach Erdmenger aufweisen. DE 10 2009 057 139 A1 zeigt aber keinen Weg auf, wie neben einer möglichst guten Dispergierung auch ein möglichst geringen Energieeintrag und ein möglichst hohen Durchsatz erreicht werden kann.

Bei der Dispergierung einer gasförmigen Phase mit einem Zahnmischelement gemäß der DE 41 34 026 A1 wurde jedoch beobachtet, dass die gebildeten Blasen inhomogen in der Größe sind und insbesondere regelmäßig größere Blasen auftreten. Nachteilig an großen Blasen ist, dass das Oberflächen-Volumenverhältnis sehr klein ist und dadurch einer nachgeschalteten Entgasung nur eine begrenzte Oberfläche zur Entgasung zur Verfügung gestellt wird. Weiterhin wurde beobachtet, dass bei Zugabe einer gasförmigen Phase in eine Polymerschmelze im Bereich von Zahnmischelementen allein eine axiale Länge, die dem Außendurchmesser der Zahnmischelemente entspricht, benötigt wird, um die zugeführte gasförmige Phase vorzuverteilen, bevor die eigentliche Dispergierung der gasförmigen Phase in mehr oder weniger kleine Blasen einsetzt.

Es stellt sich daher ausgehend vom Stand der Technik die Aufgabe, Mischelemente für mehrwellige Schneckenextruder bereitzustellen, die eine möglichst gute Dispergierung, insbesondere gasförmiger Additive, bei möglichst niedrigem Energieeintrag und einem möglichst hohen Durchsatz ermöglichen.

Diese Aufgabe wurde durch die Bereitstellung der erfindungsgemäßen Mischelemente für mehrwellige Schneckenextruder mit paarweise gleichsinnig drehenden Schneckenwellen gelöst, wobei die Anzahl der Basisgeometrieperioden in einem Längenabschnitt, welcher der Länge nach dem Außendurchmesser des Mischelements entspricht, größer oder gleich 5,5 ist, und wobei die Mischelemente dadurch gekennzeichnet sind, dass sie als Basisgeometrie ein rückförderndes Förderelement mit einem eingängigen Schneckenprofil nach Erdmenger aufweisen, dessen Kämme mit förderaktiven Nuten versehen sind und die Steigung der fördernden Nuten mindestens das 7-fache des Außendurchmessers der Mischelemente beträgt.

Überraschend wurde gefunden, dass Mischelemente, die gegenüber dem Stand der Technik eine erhöhte Anzahl an Basisgeometrieperioden pro Längenabschnitt aufweisen, eine verbesserte Dispergierung bei gleichbleibenden Energieeintrag und gleichbleibenden Durchsatz bewirken.

Eine verbesserte Dispergierung von gasförmigen, flüssigen oder festen Additiven sowie von Schleppmitteln ermöglicht eine bessere Produktqualität der plastischen Masse hinsichtlich besserer Homogenität der plastischen Masse und hinsichtlich niedrigerer Restgehalte an Monomeren, Oligomeren und Lösungsmitteln. Falls die verbesserte Dispergierung mit entsprechender Verbesserung der Produktqualität nicht benötigt wird, kann die Drehzahl solange erniedrigt werden, bis sich die bisherige Produktqualität wieder einstellt, wodurch sich niedrigere Temperaturen in der plastischen Masse ergeben und der spezifische Energiebedarf des Schneckenextruders sinkt. Alternativ kann der Durchsatz solange erhöht werden, bis sich die bisherige Produktqualität wieder einstellt, wodurch sich zum einen niedrigere Temperaturen in der plastischen Masse ergeben und der spezifische Energiebedarf des Schneckenextruders sinkt und sich zum anderen die Fixkosten pro hergestellter Produktmenge an plastischer Masse reduzieren.

Die Verwendung der erfindungsgemäßen Mischelemente ermöglicht es somit, den spezifischen Energieeintrag zu reduzieren und damit die Qualität des Produkts zu erhöhen bzw. den Produktdurchsatz zu erhöhen und trotzdem eine mit dem Stand der Technik vergleichbare Dispergierung zu erzielen.

Unter dem Begriff Schneckenextruder im Sinne der Erfindung ist ein Zweiwellenextruder, Mehrwellenextruder oder Ringextruder zu verstehen. Im Folgenden wird der Begriff Schneckenextruder als Oberbegriff für diese drei Typen von Schneckenextrudern verwendet. Ein Schneckenextruder umfasst ein oder mehrere Gehäuse mit zwei oder mehreren im Wesentlichen achsparallelen und einander durchdringenden Gehäusebohrungen und zwei oder mehreren, ineinandergreifenden Schneckenwellen, die sich gleichsinnig drehen. Die Schneckenwellen können eine beliebige Kombination an Förderelementen, Knetelementen und/oder Mischelementen aufweisen.

Ein Förderelement zeichnet sich dadurch aus (siehe zum Beispiel [1], Seiten 227-248), dass das Schneckenprofil in Achsrichtung kontinuierlich schraubenförmig verdreht und fortgesetzt wird. Dabei kann das Förderelement rechts- oder linksgängig sein und je nach Drehrichtung des Schneckenextruders förderaktiv oder rückfördernd sein. Die Steigung T der Förderelemente liegt vorzugsweise im Bereich des 0,1 -fachen bis 10-fachen des Außendurchmessers, wobei unter der Steigung die axiale Länge verstanden wird, die für eine vollständige Drehung des Schneckenprofils erforderlich ist. Die axiale Länge eines Förderelements wird aus praktischen Gründen bevorzugt in ganzzahligen Vielfachen von T/Z ausgeführt, wobei Z die Gangzahl ist.

Ein Knetelement zeichnet sich dadurch aus (siehe zum Beispiel [1], Seiten 227-248), dass das Schneckenprofil in Achsrichtung absatzweise in Form von Knetscheiben fortgeführt wird, die jeweils durch eine Nut voneinander getrennt sind. Der Versatzwinkel VW zwischen den Knetscheiben liegt bevorzugt im Bereich von 10° bis 180°. Die Anordnung der Knetscheiben kann rechts- oder linksgängig erfolgen. Je nach Drehrichtung des Schneckenextruders kann ein Knetelement förderaktiv, förderneutral oder rückfördernd sein. Die axiale Länge der Knetscheiben LK liegt bevorzugt im Bereich des 0,02-fachen bis 2-fachen des Außendurchmessers. Die axiale Länge der Nut LN zwischen zwei benachbarten Knetscheiben liegt bevorzugt im Bereich des 0,001-fachen bis 0,1-fachen des Außendurchmessers. Im Sinne der Erfindung wird unter der Steigung T eines Knetelementes die axiale Länge verstanden, die für eine vollständige, absatzweise Drehung der Knetscheiben erforderlich ist, also T = 360 / VW ^{∗} (LK + LN). Die Steigung T des Knetelements liegt vorzugsweise im Bereich des 0,1-fachen bis 10-fachen des Außendurchmessers. Die axiale Länge eines Knetelements wird aus praktischen Gründen bevorzugt in ganzzahligen Vielfachen von T/Z ausgeführt, wobei Z die Gangzahl ist.

Mischelemente werden unter anderem dadurch gebildet (siehe zum Beispiel [1], Seiten 227-248), dass Förderelemente mit Durchbrüchen in den Schneckenkämmen ausgeführt werden. Derartige Mischelemente können rechts- oder linksgängig sein. Die Steigung T derartiger Mischelemente liegt bevorzugt im Bereich des 0,1 -fachen bis 10-fachen des Außendurchmessers. Die axiale Länge eines Mischelements wird analog zu den Förderelementen bevorzugt in ganzzahligen Vielfachen von T/Z ausgeführt. Die Durchbrüche haben bevorzugt die Form einer u- oder v-förmigen Nut. Die Nuten eines Mischelements werden bevorzugt achsparallel oder gegenfördernd zur Steigung des zugrundeliegenden Förderelements angeordnet. Je nach Steigung des zugrundeliegenden Förderelements und je nach Anzahl, Größe, Form und Steigung der Nuten kann ein Mischelement förderaktiv, förderneutral oder rückfördernd sein. Unter der Steigung der Nuten wird die axiale Länge verstanden wird, die für eine vollständige Drehung einer Nut um die Längsachse des Mischelements erforderlich ist.

Mischelemente werden ferner dadurch gebildet, dass Knetelemente mit Durchbrüchen in den Knetscheiben ausgeführt werden. Derartige Mischelemente können rechts- oder linksgängig sein. Die Steigung T derartiger Mischelemente liegt bevorzugt im Bereich des 0,1-fachen bis 10-fachen des Außendurchmessers. Die axiale Länge eines Mischelements wird analog zu den Knetelementen bevorzugt in ganzzahligen Vielfachen von T/Z ausgeführt. Die Durchbrüche haben bevorzugt die Form einer u- oder v-förmigen Nut. Die Nuten eines Mischelements werden bevorzugt achsparallel oder gegenfördernd zur Steigung des zugrundeliegenden Knetelements angeordnet. Je nach Steigung des zugrundeliegenden Knetelements und je nach Anzahl, Größe, Form und Steigung der Nuten kann ein Mischelement förderaktiv, förderneutral oder rückfördernd sein. Unter der Steigung der Nuten wird die axiale Länge verstanden wird, die für eine vollständige Drehung einer Nut um die Längsachse des Mischelements erforderlich ist.

Mischelemente werden ferner aus einer alternierenden Abfolge von steigungslosen Ringen gebildet, in denen Durchbrüche vorhanden sind (siehe zum Beispiel [1], Seiten 227-248). Alternierend heißt, dass sich bei einem Paar von Wellen die Ringe auf den Wellen in axialer Richtung abwechseln. Der Außendurchmesser der Ringe liegt bevorzugt im Bereich von dem 0,9-fachen bis 0,998-fachen des Gehäuseinnendurchmessers. Die Durchbrüche haben bevorzugt die Form einer u- oder v-förmigen Nut. Die Nuten eines Mischelements werden bevorzugt achsparallel, fördernd oder gegenfördernd angeordnet. Unter der Steigung der Nuten wird die axiale Länge verstanden wird, die für eine vollständige Drehung einer Nut um die Längsachse des Mischelements erforderlich ist. Derartige Mischelemente sind dem Fachmann als Zahnblöcke (ZB) oder als Tooth Mixing Elements (TME) bekannt.

Die Geometrie des einem Mischelement zugrundeliegenden Förderelements, Knetelements oder Zahnblocks wird im Sinne der Erfindung als Basisgeometrie des Mischelements bzw. abkürzend auch nur als Basisgeometrie bezeichnet.

Unter einer Basisgeometrieperiodenlänge tb im Sinne der Erfindung wird die axiale Länge der kleinsten, geometrischen Wiederholungseinheit des einem Mischelement zugrundeliegenden Förderelements, Knetelements oder Zahnblocks verstanden.

Bei eingängigen Förderelementen ist die Basisgeometrieperiodenlänge tb gleich der Steigung T, also tb = T. Bei zweigängigen Förderelementen ist die Basisgeometrieperiodenlänge tb gleich der Hälfte der Steigung T, also tb = T/2. Allgemein ist die Basisgeometrieperiodenlänge tb eines Förderelements mit der Gangzahl Z gleich der Steigung T geteilt durch die Gangzahl Z, also tb = T/Z.

Bei eingängigen Knetelementen ist die Basisgeometrieperiodenlänge tb gleich der Steigung T, also tb = T. Bei zweigängigen Knetelementen ist die Basisgeometrieperiodenlänge tb gleich der Hälfte der Steigung T, also tb = T/2. Allgemein ist die Basisgeometrieperiodenlänge tb eines Knetelements mit der Gangzahl Z gleich der Steigung T geteilt durch die Gangzahl Z, also tb = T/Z.

Bei Zahnblöcken wird unter der Basisgeometrieperiodenlänge tb die Länge für eine Alternierung der Ringe auf einem Paar von Wellen verstanden.

Unter der Anzahl der Basisgeometrieperioden nb im Sinne der Erfindung wird die axiale Länge, die der Länge nach dem Außendurchmesser eines Mischelements Da entspricht, geteilt durch die Basisgeometrieperiodenlänge tb verstanden, also nb = Da / tb.
Figur 1 zeigt ein klassisches Zahnmischelement (ZME) gemäß DE 41 34 026 A1, dessen Anzahl der Basisgeometrieperioden gleich 3,75 ist und dessen Nutensteigung das 3,20-fache des Außendurchmessers des Mischelements beträgt. Das linke Bild zeigt die Seitenansicht, das rechte Bild zeigt eine isometrische Ansicht.
Figur 2 zeigt eine Variante eines Zahnmischelements, deren Anzahl der Basisgeometrieperioden gleich 5,63 ist und deren Nutensteigung das 3,20-fache des Außendurchmessers des Mischelements beträgt. Das linke Bild zeigt die Seitenansicht, das rechte Bild zeigt eine isometrische Ansicht.
Figur 3 zeigt eine Variante eines Zahnmischelements, deren Anzahl der Basisgeometrieperioden gleich 7,51 ist und deren Nutensteigung das 3,20-fache des Außendurchmessers des Mischelements beträgt. Das linke Bild zeigt die Seitenansicht, das rechte Bild zeigt eine isometrische Ansicht.
Figur 4 zeigt eine Variante eines Zahnmischelements, deren Anzahl der Basisgeometrieperioden gleich 7,51 ist und deren Nutensteigung das 6,39-fache des Außendurchmessers des Mischelements beträgt. Das linke Bild zeigt die Seitenansicht, das rechte Bild zeigt eine isometrische Ansicht.
Figur 5 zeigt eine erfindungsgemäße Variante eines Zahnmischelements, deren Anzahl der Basisgeometrieperioden gleich 7,51 ist und deren Nutensteigung das 7,99-fache des Außendurchmessers des Mischelements beträgt. Das linke Bild zeigt die Seitenansicht, das rechte Bild zeigt eine isometrische Ansicht.
Figur 6 zeigt eine erfindungsgemäße Variante eines Zahnmischelements, deren Anzahl der Basisgeometrieperioden gleich 7,51 ist und deren Nutensteigung das 9,59-fache des Außendurchmessers des Mischelements beträgt. Das linke Bild zeigt die Seitenansicht, das rechte Bild zeigt eine isometrische Ansicht.
Figur 7 zeigt eine Variante eines Zahnmischelements, deren Anzahl der Basisgeometrieperioden gleich 7,51 ist und deren Nutensteigung das 3,20-fache des Außendurchmessers des Mischelements beträgt, wobei die Nuten bis zum Kerndurchmesser reichen. Das linke Bild zeigt die Seitenansicht, das rechte Bild zeigt eine isometrische Ansicht.
Figur 8 zeigt eine erfindungsgemäße Variante eines Zahnmischelements, deren Anzahl der Basisgeometrieperioden gleich 7,51 ist und deren Nutensteigung das 3,20-fache des Außendurchmessers des Mischelements beträgt. Das linke Bild zeigt die Seitenansicht, das rechte Bild zeigt eine isometrische Ansicht.
Figur 9 zeigt ein erfindungsgemäßes Paar von Zahnmischelementen, deren Anzahl der Basisgeometrieperioden gleich 7,51 ist und deren Nutensteigung das 7,99-fache des Außendurchmessers des Mischelements beträgt. Als Spielstrategie wird die Achsabstand-Vergrößerung verwendet, welche zu einem ungleichmäßigen Radial- und Axialspiel zwischen den beiden Mischelementen führt. Das obere Bild zeigt die Seitenansicht des Paares von Zahnmischelementen, das untere Bild zeigt den Ausschnitt A vergrößert.
Figur 10 zeigt ein erfindungsgemäßes Paar von Zahnmischelementen, deren Anzahl der Basisgeometrieperioden gleich 7,51 ist und deren Nutensteigung das 7,99-fache des Außendurchmessers des Mischelements beträgt. Als Spielstrategie wird die Raumäquidistante verwendet, welche zu einem gleichmäßigen Radial- und Axialspiel zwischen den beiden Mischelementen führt. Das obere Bild zeigt die Seitenansicht des Paares von Zahnmischelementen, das untere Bild zeigt den Ausschnitt A vergrößert.
Figur 11 zeigt den grundsätzlichen Aufbau einer Dispergierzone eines erfindungsgemäßen Entgasungs-Extruders.
Figur 12 zeigt den Versuchsaufbau eines Plexiglasextruders.
Figur 13 zeigt ein Mischelement vom TME-Typ.
Figur 14 zeigt ein erfindungsgemäßes Paar Zahnmischelementen in einem Gehäuse eines Zweiwellenextruders.

In einer bevorzugten Ausführungsform der erfindungsgemäßen Mischelemente ist die Anzahl der Basisgeometrieperioden nb in einem axialen Längenabschnitt, welcher der Länge nach dem Außendurchmesser der Mischelemente entspricht, größer oder gleich 5,5, vorzugsweise größer oder gleich 7, und kleiner oder gleich 10. Es wurde festgestellt, dass bei einem Wert von über 10 die Festigkeit der Schneckenkämme oder der Knetscheiben nicht mehr ausreichend gewährleistet ist.

Die erfindungsgemäßen Mischelemente weisen als Basisgeometrie ein rückförderndes Förderelement mit einem eingängigen Schneckenprofil nach Erdmenger auf, dessen Kämme mit förderaktiven Nuten versehen sind. Diese Mischelemente sind dem Fachmann als sogenannte Zahnmischelemente (ZMEs) bekannt. Erfindungsgemäß beträgt die Steigung der förderaktiven Nuten der erfindungsgemäßen Zahnmischelemente mindestens das 7-fache des Außendurchmessers der Mischelemente, besonders bevorzugt mindestens das 9-fache des Außendurchmessers der Mischelemente. Die Zahnmischelemente können eine beliebige Anzahl an Nuten aufweisen. Vorzugsweise liegt die Anzahl der Nuten im Bereich von 6 bis 20, besonders bevorzugt 8 bis 16. Die Nuten können u- oder v-förmig sein.

Gegenstand der vorliegenden Erfindung ist weiterhin die Verwendung der erfindungsgemäßen Mischelemente in einem mehrwelligen Schneckenextruder.

Vorzugsweise werden die erfindungsgemäßen Mischelemente in zweiwelligen Schneckenextrudern eingesetzt. Die erfindungsgemäßen Mischelemente können dabei mit anderen Schneckenelementen, insbesondere mit Förderelementen, Knetelementen und/oder Mischelementen kombiniert werden.

Gegenstand der vorliegenden Erfindung ist weiterhin ein Schneckenextruder umfassend zwei oder mehrere Schneckenwellen, welche die folgende Abfolge an Schneckenelementen als Dispergierzone aufweisen:
(i) förderaktive Schneckenelemente, vorzugsweise förderaktive Förderelemente oder förderaktive Knetelemente,
(iii) erfindungsgemäße Mischelemente,
(v) förderaktive Schneckenelemente, vorzugsweise förderaktive Förderelemente oder förderaktive Knetelemente.

In einer bevorzugten Ausführungsform umfassen die Schneckenwellen die folgende Abfolge an Schneckenelementen als Dispergierzone:
(i) förderaktive Schneckenelemente, vorzugsweise förderaktive Förderelemente oder förderaktive Knetelemente,
(ii) wenigstens ein rückförderndes Schneckenelement, vorzugsweise rückfördernde Förderelemente oder rückfördernde Knetelemente,
(iii) erfindungsgemäße Mischelemente,
(iv) wenigstens ein rückförderndes Schneckenelement, vorzugsweise rückfördernde Förderelemente oder rückfördernde Knetelemente,
(v) förderaktive Schneckenelemente, vorzugsweise förderaktive Förderelemente oder förderaktive Knetelemente.

Der Schneckenextruder kann mehrere Dispergierzonen umfassend die vorgenannten Abfolgen (i) bis (v) enthalten. Vorzugsweise enthält der Schneckenextruder 1 bis 8, besonders bevorzugt 1 bis 6, ganz besonders bevorzugt 1 bis 4 der Dispergierzonen. Die Dispergierzonen dienen dazu, ein Additiv, vorzugsweise Schleppmittel möglichst fein in einer Polymerschmelze zu dispergieren.

Als Schneckenelemente (i), (ii), (iv) und (v) können Förderelemente, Knetelemente und/oder Mischelemente eingesetzt werden. Vorzugsweise werden als Schneckenelemente (i) und (v) Förderelemente oder Knetelemente eingesetzt. Als Schneckenelemente (ii) und (iv) werden bevorzugt Förderelemente eingesetzt

Durch den Einbau von einem oder mehreren rückfördernden, druckverbrauchenden Schneckenelementen (ii) kann verhindert werden, dass ein gasförmiges, zu dispergierendes Additiv, welches vorzugsweise stromabwärts von (ii) eingeführt wird, nach stromauf entweichen kann. Durch den Einsatz von einem oder mehreren druckverbrauchenden Schneckenelement(en) (iv) kann das Druckniveau im Teilbereich der Dispergierzone umfassend die erfindungsgemäßen Mischelemente (iii) eingestellt werden.

Vorzugsweise weisen die Mischelemente (iii) einen geringeren Außendurchmesser auf als wenigstens eines der Schneckenelemente (i) und (ii) und als wenigstens eines der Schneckenelemente (iv) und (v).

Eine wichtige Betriebsgröße eines Schneckenextruders ist der Volumenstrom V (Einheit [m³ / s]). Um bei unterschiedlich großen Schneckenextrudern ein gleiches Betriebsverhalten zu erhalten, ist es notwendig, diese bei dem gleichen dimensionslosen Volumenstrom Q (Einheit [1]) zu betreiben. Wie in [1] auf den Seiten 129 bis 146 dargestellt ist, berechnet sich der dimensionslose Volumenstrom Q aus dem Volumenstrom V geteilt durch das Produkt von Extruderdrehzahl n (Einheit [1 / s]) und der dritten Potenz des Gehäuseinnendurchmessers Dg (Einheit [m³]). Mathematisch ergibt sich folgende Formel: Q = V / (n Dg³). Wie in der Veröffentlichung [2] = Aufbereitungstechnik 2013, VDI Verlag, Düsseldorf, 2013 auf den Seiten 53 bis 66 dargestellt ist, liegen typische dimensionslose Durchsätze eines Compoundier-Extruders im Bereich von Q = 0,06 - 0,15 und typische dimensionslose Durchsätze eines Entgasungsextruders im Bereich von Q = 0,03 - 0,06.

Eine wichtige Betriebsgröße eines Schneckenelements ist sein dimensionsloser Eigendurchsatz A1 (Einheit [1]). Unter dem dimensionslosen Eigendurchsatz A1 versteht man denjenigen dimensionslosen Durchsatz, den ein Schneckenelement erzielt, wenn das Schneckenelement vollständig mit einer plastischen Masse gefüllt ist und der Druckgradient längs des Schneckenelements gleich Null ist. Schneckenelemente können je nach Geometrie des Schneckenelements ein positives A1, ein A1 = 0 oder ein negatives A1 aufweisen. Förderaktive Förder- und Knetelemente weisen ein positives A1 auf. Rückfördernde Förder- und Knetelemente weisen ein negatives A1 auf. Bei Distanzhülsen oder zweigängigen Knetelementen, deren Knetscheiben um 90° zueinander versetzt angeordnet sind, ergibt sich ein dimensionsloser Eigendurchsatz von A1 = 0. Bei Mischelementen kann der dimensionslose Eigendurchsatz durch die Wahl der Steigung der Nuten zwischen negativem und positivem Eigendurchsatz eingestellt werden. Schneckenelemente, deren dimensionsloser Eigendurchsatz A1 kleiner oder gleich dem dimensionslosen Volumenstrom Q durch den Schneckenextruder ist, sind im Schneckenextruder immer vollständig mit der plastischen Masse gefüllt. Schneckenelemente, deren dimensionsloser Eigendurchsatz A1 größer dem dimensionslosen Volumenstrom Q durch den Schneckenextruder ist, können in dem Schneckenextruder gefüllt oder teilgefüllt sein.

Vorzugsweise beträgt der Eigendurchsatz A1 erfindungsgemäßer Mischelemente höchstens das 0,8 fache, besonders bevorzugt höchstens das 0,6 fache des dimensionslosen Volumenstroms Q. Dies hat den Vorteil, dass die erfindungsgemäßen Mischelemente auch bei kleinen Betriebsstörungen oder bei geringerer Anlagenauslastung ausreichend gefüllt sind.

Ein weiterer Gegenstand der vorliegenden Erfindung ist ein Verfahren zur Extrusion plastischer Massen in einem erfindungsgemäßen Schneckenextruder.

Unter einer plastischen Masse wird eine verformbare Masse verstanden. Beispiele für plastische Massen sind Polymerschmelzen, vor allem von Thermoplasten und Elastomeren, Mischungen von Polymerschmelzen oder Dispersionen von Polymerschmelzen mit Feststoffen, Flüssigkeiten oder Gasen.

In dem erfindungsgemäßen Verfahren zur Extrusion plastischer Massen werden die Mischelemente (iii) vorzugweise zum Dispergieren von gasförmigen, flüssigen oder pulverförmigen Additiven, besonders bevorzugt gasförmigem Schleppmittel, in der plastischen Masse verwendet. Ein besonders bevorzugtes Schleppmittel ist Stickstoff.

Plastische Massen, die erfindungsgemäß mit hoher Effizienz bei gleichzeitiger Produktschonung extrudiert werden können, sind z.B. Suspensionen, Pasten, Glas, Keramische Massen, Metalle in Form einer Schmelze, Kunststoffe, Kunststoffschmelzen, Polymerlösungen, Elastomer- und Kautschuk-Massen.

Bevorzugt werden Kunststoffe und Polymerlösungen eingesetzt, besonders bevorzugt thermoplastische Polymere. Als thermoplastisches Polymer wird bevorzugt wenigstens eines aus der Reihe Polycarbonat, Polyamid, Polyester, insbesondere Polybutylenterephthalat und Polyethylenterephthalat, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid eingesetzt. Ebenso bevorzugt eingesetzt werden so genannte Blends aus den aufgeführten Kunststoffen, worunter der Fachmann eine Kombination aus zwei oder mehreren Kunststoffen versteht. Besonders bevorzugt wird das erfindungsgemäße Verfahren bei der Herstellung und der Compoundierung von Polycarbonat angewendet. Hierbei bietet es Vorteile vor allem bei der Farbe des Polycarbonats, bei nicht eingefärbtem Polycarbonat gemessen mit dem Yellowness Index (YI).

Polycarbonate können bekanntermaßen nach dem Grenzflächenverfahren oder Schmelzeumesterungsverfahren hergestellt werden. In beiden Herstellungsverfahren werden Polycarbonate erhalten, die Restgehalte an Monomeren, Oligomere und/oder Lösungsmittel aufweisen. Das erfindungsgemäßen Verfahren eignet sich dazu, diese flüchtigen Bestandteile zumindest teilweise zu entfernen.

Im Grenzflächenverfahren zur Herstellung von Polycarbonaten werden Lösungsmittel wie aromatische Chlorkohlenwasserstoffe wie Chlorbenzol und Dichlormethan eingesetzt, deren Restgehalte im Endprodukt unerwünscht sind, da sie im Polycarbonat stören. Durch die erhöhte Dispergierwirkung der erfindungsgemäßen Mischelemente (iii) können die Restgehalte weiter erniedrigt werden oder verglichen mit Verfahren aus dem Stand der Technik durch Erniedrigung der Drehzahl des Extruders thermische Schädigungen und Abbauprodukte vermieden werden. Eine effiziente Aufkonzentrierung der Polycarbonatlösung und Ausdampfung der Restgehalte an Lösungsmittel unter Vermeidung thermischer Schädigungen ist von höchster Bedeutung, um Polycarbonate mit guten optischen Eigenschaften zu erlangen.

Das Verfahren zur Polycarbonatsynthese nach dem Phasengrenzflächenverfahren ist mannigfaltig in der Literatur beschrieben, so unter anderem in Schnell, "Chemistry and Physics of Polycarbonates", Polymer Reviews, Volume 9, Interscience Publishers, New York, London, Sydney 1964, Seite 33-70.

Bei dem Phasengrenzflächenverfahren erfolgt die Phosgenierung eines in wässrig-alkalischer Lösung (oder Suspension) vorgelegten Dinatriumsalzes eines Bisphenols (oder eines Gemisches verschiedener Bisphenole) in Gegenwart eines inerten organischen Lösungsmittels oder Lösungsmittelgemisches, welches eine zweite Phase ausbildet. Die entstehenden, hauptsächlich in der organischen Phase vorliegenden Oligocarbonate werden mit Hilfe geeigneter Katalysatoren zu hochmolekularen, in der organischen Phase gelösten Polycarbonaten aufkondensiert. Die organische Phase wird schließlich abgetrennt und in einem mehrstufigen Verfahren gewaschen, um Reste von Natrium und Katalysator zu entfernen. Typischerweise enthält die organische Phase nach der Reaktion 10-20 Gew.-% Polycarbonat.

Das Polycarbonat muss anschließend aus der organischen Phase isoliert werden. Die gängigen Verfahren zur Konzentrierung der Polycarbonatlösung und zur Isolierung des Polycarbonats sind in der Patentliteratur und in Lehrbüchern beschrieben und dem Fachmann geläufig. Die Isolierung des Polycarbonats aus der Lösung wird bevorzugt durch Verdampfen des Lösungsmittels mittels Temperatur oder Vakuum durchgeführt. Dieses Verfahren erfordert, um nach dem Verdampfen des Lösungsmittels direkt die Schmelzephase zu erhalten, den Einsatz eines hoch siedenden (>100°C) Lösungsmittels, beispielsweise Chlorbenzol. Um die Löslichkeit des Polymers im Lösungsmittel während der Reaktion zu verbessern, wird auch ein Gemisch aus einem oder mehreren hochsiedenden Lösungsmitteln und dem niedrig siedenden Dichlormethan eingesetzt. Typischerweise ist das Gewichtsverhältnis von Dichlormethan zu dem hochsiedenden Lösungsmittel etwa 1:1.

Eine Möglichkeit, Polycarbonat ohne nachweisbare Mengen an Restlösemittel herzustellen, ist die Herstellung nach dem Umesterungsverfahren. Dieses Verfahren ist ebenfalls in Schnell, "Chemistry and Physics of Polycarbonates", beschrieben. Bei diesem Verfahren werden die Monomere, ein Bisphenol oder eine Mischung von verschiedenen Bisphenolen mit einem Diarylcarbonat oder einer Mischung aus verschiedenen Diarylcarbonaten, in einer Gleichgewichtsreaktion umgesetzt. Als Nebenprodukt entstehen hierbei ein Phenol oder eine Mischung aus Phenolen. Unter Entfernung dieser Phenole baut sich das gewünschte Molekulargewicht auf.

Nach dem Umesterungsverfahren hergestellte Polycarbonate enthalten zwangsläufig die bei der Reaktion entstehenden Phenole sowie Reste an den Monomeren Bisphenol und an Diarylcarbonat (beispielsweise Diphenylcarbonat). Restgehalte an Diphenylcarbonat liegen beispielsweise im Bereich von 200 bis 700 ppm. Diese Stoffe wirken ebenfalls störend. Sie werden während der Verarbeitung wie Spritzguss und Extrusion beim Verarbeiter teilweise freigesetzt und führen dort zu Geruchsbelästigung und Umweltbelastung. Weiterhin können sie beim Spritzguss zu Belagbildung und damit zu reduzierten Standzeiten führen. Auch können sie bei Kontakt mit Lebensmitteln aus dem Polycarbonat in das Lebensmittel übergehen und dort zu Veränderungen im Geschmack führen. Besonders sensibel gegen Geschmacksveränderungen ist Wasser. Besonders Phenole neigen zur Bildung von halogenierten Phenolen, wenn Lebensmittelbehälter aus Polycarbonat bei der Reinigung und / oder Desinfektion mit Chlor-aktiven Agenzien oder stark oxidierenden Mitteln bei Anwesenheit von Chlor- oder Brom-Ionen in Kontakt kommen. Der Geschmacksschwellenwert von Phenol in Wasser ist in der Literatur mit 10 µg/l (Young & Crane et al.,1996) angegeben, der von halogenierten Phenolen liegt in etwa um den Faktor 500 niedriger (.H. Burttschel et al., J. Am. Water Works Assoc., 51:205(1959) "Chlorine derivative of phenol causing taste and odor und C. Joll et al., Curtin University of Technology, Centre for Applied organic Geochemistry, "The Chemistry of Halophenol Tastes in Perth Drinking Water") . Daher sind Restgehalte an Phenol in Polycarbonat für das Lebensmittel Wasser besonders ungünstig.

Eine weitere Möglichkeit, Polycarbonat herzustellen, besteht in der Phosgenierung von Bisphenolen in der Gegenwart von Pyridin oder Mischungen von Pyridin und Chlorbenzol, wie beispielsweise in der US 3 114 432 beschrieben. Polycarbonate mit Restgehalten an Pyridin sind aufgrund des intensiven, unangenehmen Geruchs für Lebensmittelanwendungen völlig ungeeignet.

Halogenierte Lösemittel zeigen ähnlich niedrige sensorische Schwellen wie Phenole und deren halogenierten Derivate. Sie besitzen zwar niedrigere Löslichkeiten und migrieren aufgrund ihrer niedrigeren Diffusionskonstanten langsamer, gehen aber je nach Bedingungen in Wasser über und verursachen somit Geschmacksveränderungen. Bei Geschmackstests haben Testpersonen bereits Geschmacksveränderungen bei Chlorbenzol-Gehalten im Wasser von 1 ppb festgestellt. Um eine solche Geschmacksveränderung sicher auszuschließen, ist ein Chlorbenzol-Restgehalt in aus Polycarbonat hergestellten Trinkwasserflaschen von weniger als 10 ppm erforderlich.

Eine weitere Möglichkeit der Herstellung von Polycarbonat besteht in der Reaktion in der Phasengrenzfläche mit anschließender Isolierung des Polycarbonates aus dem organischen Lösemittel durch Eindüsung eines erhitzten Gases, vor allem Wasserdampf, zum Austreiben der flüchtigen Bestandteile. Dabei wird die Polycarbonatlösung mit dem Trägergas versprüht, und Polycarbonat fällt als Feststoff an, vor allem als wasserfeuchte Suspension. Andere Isolierungsmethoden sind die Kristallisation und Fällung sowie das Ausheizen der Reste des Lösungsmittels in der festen Phase. Letzteres Verfahren erfordert den Einsatz von Dichlormethan als Lösungsmittel. Restgehalte an Dichlormethan stören allerdings im Polycarbonat besonders, da Dichlormethan bekanntermaßen beim Verarbeitungsprozess mit Restfeuchte zusammen Salzsäure abspaltet und so zu Verfärbungen des Polycarbonats und zu Korrosion an Werkzeugen führen kann. Dichlormethan kann bei erhöhten Temperaturen auch im Aufarbeitungsprozess zu Qualitätseinbußen wie Verfärbungen und Gelbildung führen.

Bei der Phosgenherstellung aus Chlor und Kohlenmonoxid, die für das Phasengrenzflächenverfahren erforderlich ist, wird eine ggf. vorkommende Nebenkomponente Methan bekannterweise zu Tetrachlorkohlenstoff umgesetzt. Bei dem Sprühverfahren wird der Schwersieder Tetrachlorkohlenstoff gegenüber dem Leichtsieder Dichlormethan angereichert, so dass nach dem Sprühverfahren auch Restgehalte an Tetrachlorkohlenstoff im Bereich von bis zu 2 ppm übrigbleiben können. Restgehalte an Tetrachlorkohlenstoff sind, wie dem Fachmann bekannt, im Produkt besonders unerwünscht.

Eine weitere Methode ist die Isolierung von Polycarbonat aus Lösung durch Eindüsen von Dämpfen von aromatischen, nicht chlorierten aromatischen Verbindungen wie beispielsweise Benzol, Toluol, Ethylbenzol oder verschiedener Xylole in eine Polycarbonat-Lösung in Dichlormethan mit anschließender Verfestigung und Trocknung, wie beispielsweise in der DE 3 429 960 beschrieben. Restgehalte an aromatischen Verbindungen können ebenfalls geschmacksverändernd wirken. Eine Methode zum sicheren Entfernen von Tetrachlorkohlenstoff und Dichlormethan lehrt die DE 3 429 960 nicht.

Ein erheblicher Nachteil dieser Methode tritt bei der industriellen Umsetzung zu Tage. Hierfür ist aus Gründen der Wirtschaftlichkeit und des Umweltschutzes zwingend erforderlich, die Stoffkreisläufe zu schließen. Vor allem müssen die eingesetzten Aromaten nach der Entfernung aus dem Polycarbonat wieder in den Prozess zurückgeführt werden. Niedermolekulare Bestandteile des Polycarbonats wie beispielsweise thermisch instabile Bisphenole werden bei der Trocknung zusammen mit dem Lösemittel verdampft. Sie werden im Kreislauf thermisch und ggf. oxidativ belastet. Dem Fachmann ist bekannt, dass beispielsweise Bisphenole unter Temperaturbelastung zu farbigen, vor allem gelben, Verbindungen, umgesetzt werden. Diese farbigen Verbindungen reichern sich im Kreislauf an, so dass sie im Dauerbetrieb zu stetiger Verschlechterung der Farben des produzierten Polycarbonats führen.

Restgehalte an hochsiedenden Lösemitteln wie aromatischen Kohlenwasserstoffen und ChlorKohlenwasserstoffen wirken ebenfalls störend. Sie werden während der Verarbeitung wie Spritzguss und Extrusion beim Verarbeiter teilweise freigesetzt und führen dort zu Geruchsbelästigung und Umweltbelastung. Weiterhin können sie beim Spritzguss zu Belagbildung und damit reduzierten Standzeiten führen. Auch können sie bei Kontakt mit Lebensmitteln aus dem Polycarbonat in das Lebensmittel übergehen und dort zu Veränderungen im Geschmack führen. Ein negativer Einfluss auf den Geschmack kann bereits bei Restgehalten von oberhalb von 10 ppm aromatischen ChlorKohlenwasserstoffen im Polycarbonat festgestellt werden.

Bei den bekannten Verfahren zur Verdampfung werden Polycarbonatlösungen wiederholt unter leichtem Überdruck auf Temperaturen oberhalb des Siedepunktes erhitzt und diese überhitzten Lösungen anschließend in einen Behälter entspannt, wobei in dem Behälter ein niedrigerer Druck herrscht, als dem Dampfdruck in der Lösung entspricht. Die Wiederholung des Verfahrens ist im Allgemeinen günstig, da die Konzentration an Polycarbonat in der Lösung nach der Reaktion relativ niedrig ist und durch die Wiederholung des Verfahrens eine starke Überhitzung vermieden werden kann. Gängige Verfahren für die apparative Eindampfung von Polycarbonatlösungen sind dem Fachmann geläufig. Beispielsweise kann die überhitzte Lösung in ein beheiztes Wendelrohr entspannt werden, welches in einen Abscheider mündet.

Oberhalb einer bestimmten Konzentration an Polycarbonat (etwa 60 Gew.-%) wird die Eindampfung durch Flashverdampfung durch die hohen Viskositäten erschwert. Im Allgemeinen ist es günstig, das restliche Lösungsmittel mit anderen Verfahren, Apparaten und Maschinen zu entfernen.

Um die Restgehalte an flüchtigen Bestandteilen zu entfernen, kann der erfindungsgemäße Schneckenextruder zu Einsatz kommen. Dabei kommt vorzugsweise ein Schleppmittel zum Einsatz, um die Entgasungsoberfläche zu vergrößern.

Soweit ein Schleppmittel zum Einsatz kommt, wird dieses erfindungsgemäß vorzugsweise im Bereich der Mischelemente (iii) zugeführt und durch diese in der Polymerschmelze dispergiert. Als Schleppmittel kann vorzugsweise Stickstoff verwendet werden. Der zugeführte Schleppmittelvolumenstrom sollte bevorzugt vorzugsweise 0.05 Masse-% bis 0.3 Masse-% betragen. Nach der Entgasung können noch Additive und ggf. ein Strom an aufgeschmolzenem Polycarbonat zugegeben werden, die in einer Druckaufbauzone mit dem Hauptstrom gemischt werden. Bevorzugt werden die Additive in einem Polycarbonatstrom vorgemischt, wobei besonders bevorzugt eine Mischung aus erfindungsgemäßem Polycarbonat und Additiven verwendet wird.

Weitere bevorzugte Einsatzmaterialien sind Kautschuke. Als Kautschuk wird bevorzugt wenigstens einer aus der Reihe Styrol-Butadien-Kautschuk, Naturkautschuk, Butatiden-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, ChloroprenKautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyethylen-Kautschuk eingesetzt. Eine Kombination von zwei oder mehreren der aufgeführten Kautschuke, oder eine Kombination aus einem oder mehreren Kautschuk mit einem oder mehreren Kunststoffen ist natürlich auch möglich.

Diese Thermoplaste und Elastomere können in reiner Form oder als Mischungen mit Füll- und Verstärkungsstoffen, wie insbesondere Glasfasern, als Mischungen untereinander oder mit anderen Polymeren oder als Mischungen mit üblichen Polymeradditiven eingesetzt werden

In einer bevorzugten Ausführungsform werden den plastischen Massen, insbesondere den Polymerschmelzen und Mischungen von Polymerschmelzen, Additive beigemengt. Diese können als Feststoffe, Flüssigkeiten oder Lösungen gemeinsam mit dem Polymer in den Extruder gegeben werden oder aber es wird wenigstens ein Teil der Additive oder alle Additive dem Extruder über einen Seitenstrom zugeführt.

Additive können einem Polymer vielfältige Eigenschaften verleihen. Dies können beispielsweise Farbmittel, Pigmente, Verarbeitungshilfsmittel, Füllstoffe, Antioxidantien, Verstärkungsstoffe, UV-Absorber und Lichtstabilisatoren, Metalldesaktivatoren, Peroxidfänger, basische Stabilisatoren, Keimbildner, als Stabilisatoren oder Antioxidatien wirksame Benzofurane und Indolinone, Formtrennmittel, flammhemmende Additive, antistatische Mittel, Färbemittel und Schmelzestabilisatoren. Beispielhaft für diese sind Ruß, Glasfaser, Ton, Glimmer, Graphitfaser, Titandioxid, Kohlenstofffasern, Kohlenstoffnanoröhrchen, ionische Flüssigkeiten und Naturfasern.

In einer anderen bevorzugten Ausführungsform enthalten die dem Schneckenextruder zugeführten plastischen Massen Monomere, Oligomere und/oder Lösungsmittel, welche durch das erfindungsgemäße Verfahren zumindest teilweise entfernt werden. In dieser Ausführungsform wird unter Einsatz der Mischelemente (iii) ein gasförmiges Schleppmittel in der plastischen Masse dispergiert. Vorzugsweise wird das Schleppmittel in einem späteren Schritt durch Anlegen von Vakuum wieder entfernt.

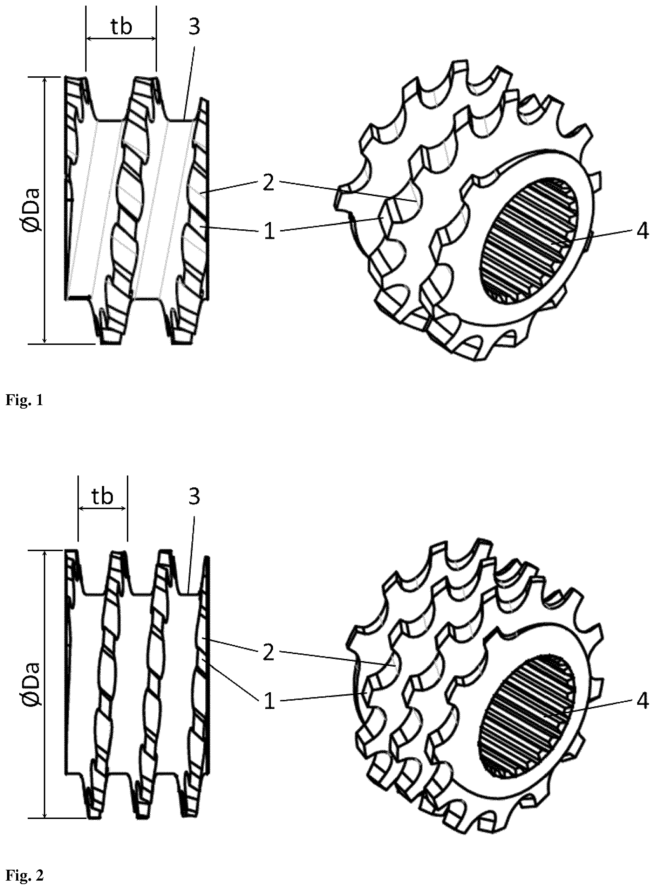

Die Erfindung wird nachstehend anhand der Figuren beispielhaft näher erläutert ohne sie jedoch auf diese zu beschränken. Die Figuren 1 bis 10 wurden mit Hilfe eines Computerprogramms erzeugt. Um die Übertragbarkeit auf unterschiedliche Extruderbaugrößen zu vereinfachen, werden dimensionslose geometrische Größen für den Außendurchmesser, den Kerndurchmesser und dem Schneckenspiel gebildet. Als Bezugsgröße wird der Gehäuseinnendurchmesser Dg verwendet, da diese Größe an einem Extruder nicht verändert wird. Die dimensionslosen Größen werden auf 3 Nachkommastellen genau angegeben, ebenso die Basisgeometrieperiodenlänge. Die Anzahl der Basisgeometrieperioden wird auf 2 Nachkommastellen genau angegeben.

Figur 1 beschreibt ein Zahnmischelement gemäß dem Stand der Technik mit den Zähnen (1), den Nuten (2), dem Schneckengang (3), der Innerverzahnung (4), der Basisgeometrielänge tb und dem Außendurchmesser Da. Der dimensionslose Außendurchmesser an den Spitzen der Zähne (1) beträgt 0,966. Der dimensionslose Kerndurchmesser im Grund des Schneckengangs (3) beträgt 0,647. Das dimensionslose Schneckenspiel beträgt 0,017. Die Basisgeometrieperiodenlänge tb beträgt das 0,266 fache des Außendurchmessers des Zahnmischelements. Die Anzahl der Basisgeometrieperioden beträgt somit nb = 3,75. Die Anzahl der Nuten (2) beträgt 12 und die Steigung der Nuten beträgt das 3,20-fache des Außendurchmessers des Zahnmischelements.

Figur 2 beschreibt ein Zahnmischelement mit den Zähnen (1), den Nuten (2), dem Schneckengang (3), der Innerverzahnung (4), der Basisgeometrielänge tb und dem Außendurchmesser Da. Der dimensionslose Außendurchmesser an den Spitzen der Zähne (1) beträgt 0,966. Der dimensionslose Kerndurchmesser im Grund des Schneckengangs (3) beträgt 0,647. Das dimensionslose Schneckenspiel beträgt 0,017. Die Steigung der Basisgeometrie beträgt das 0,178-fache des Außendurchmessers des Zahnmischelements. Die Anzahl der Basisgeometrieperioden beträgt somit nb = 5,63. Die Anzahl der Nuten (2) beträgt 12 und die Steigung der Nuten beträgt das 3,20-fache des Außendurchmessers des Zahnmischelements.

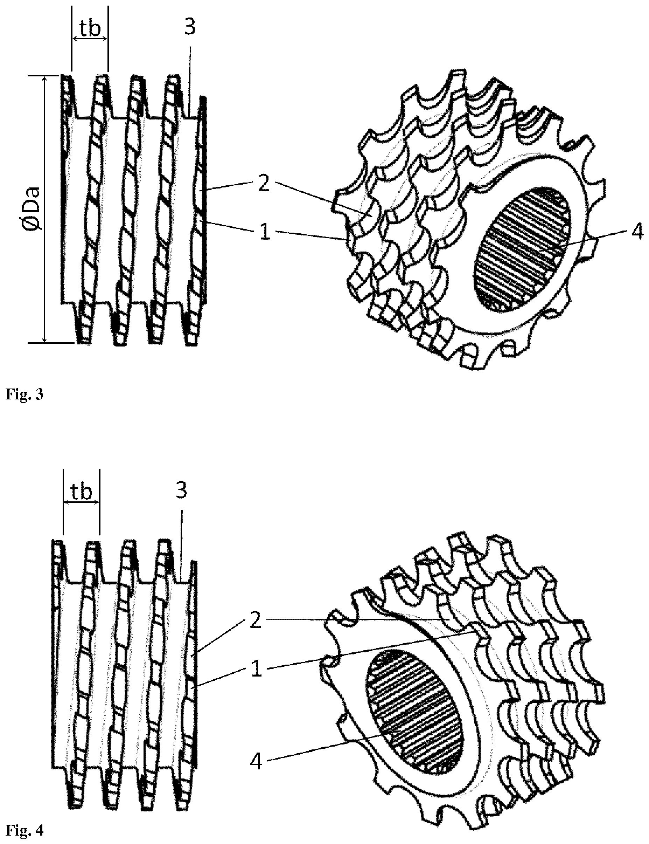

Figur 3 beschreibt ein Zahnmischelement mit den Zähnen (1), den Nuten (2), dem Schneckengang (3), der Innerverzahnung (4), der Basisgeometrielänge tb und dem Außendurchmesser Da. Der dimensionslose Außendurchmesser an den Spitzen der Zähne (1) beträgt 0,966. Der dimensionslose Kerndurchmesser im Grund des Schneckengangs (3) beträgt 0,664. Das dimensionslose Schneckenspiel beträgt 0,009. Die Steigung der Basisgeometrie beträgt das 0,133-fache des Außendurchmessers des Zahnmischelements. Die Anzahl der Basisgeometrieperioden beträgt somit nb = 7,51. Die Anzahl der Nuten (2) beträgt 12 und die Steigung der Nuten beträgt das 3,20-fache des Außendurchmessers des Zahnmischelements.

Figur 4 beschreibt ein Zahnmischelement mit den Zähnen (1), den Nuten (2), dem Schneckengang (3), der Innerverzahnung (4) und der Basisgeometrielänge tb. Der dimensionslose Außendurchmesser an den Spitzen der Zähne (1) beträgt 0,966. Der dimensionslose Kerndurchmesser im Grund des Schneckengangs (3) beträgt 0,664. Das dimensionslose Schneckenspiel beträgt 0,009. Die Steigung der Basisgeometrie beträgt das 0,133-fache des Außendurchmessers des Zahnmischelements. Die Anzahl der Basisgeometrieperioden beträgt somit nb = 7,51. Die Anzahl der Nuten (2) beträgt 12 und die Steigung der Nuten beträgt das 6,39-fache des Außendurchmessers des Zahnmischelements.

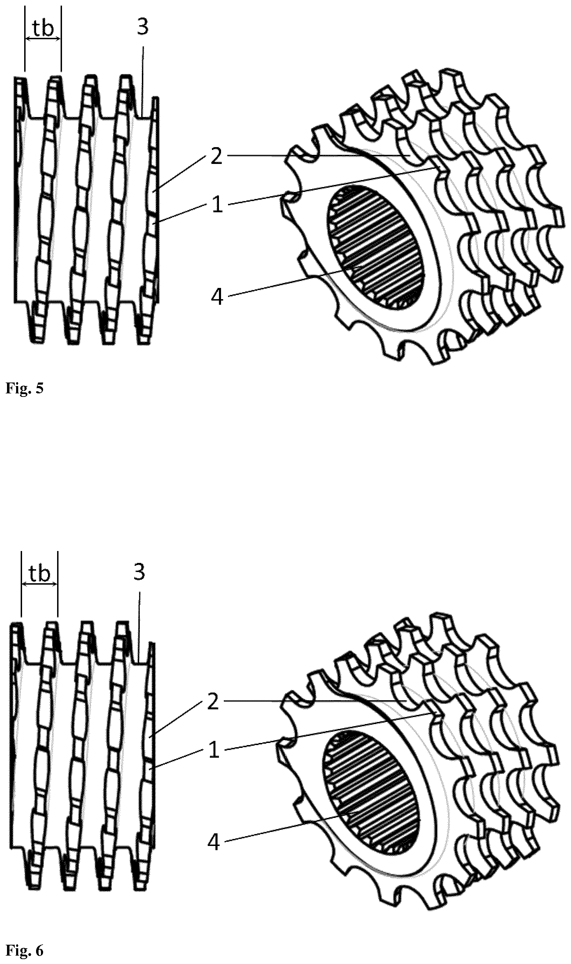

Figur 5 beschreibt ein neuartiges Zahnmischelement mit den Zähnen (1), den Nuten (2), dem Schneckengang (3),der Innerverzahnung (4) und der Basisgeometrielänge tb. Der dimensionslose Außendurchmesser an den Spitzen der Zähne (1) beträgt 0,966. Der dimensionslose Kerndurchmesser im Grund des Schneckengangs (3) beträgt 0,664. Das dimensionslose Schneckenspiel beträgt 0,009. Die Steigung der Basisgeometrie beträgt das 0,133-fache des Außendurchmessers des Zahnmischelements. Die Anzahl der Basisgeometrieperioden beträgt somit nb = 7,51. Die Anzahl der Nuten (2) beträgt 12 und die Steigung der Nuten beträgt das 7,99-fache des Außendurchmessers des Zahnmischelements.

Figur 6 beschreibt ein neuartiges Zahnmischelement mit den Zähnen (1), den Nuten (2), dem Schneckengang (3),der Innerverzahnung (4) und der Basisgeometrielänge tb. Der dimensionslose Außendurchmesser an den Spitzen der Zähne (1) beträgt 0,966. Der dimensionslose Kerndurchmesser im Grund des Schneckengangs (3)) beträgt 0,664. Das dimensionslose Schneckenspiel beträgt 0,009. Die Steigung der Basisgeometrie beträgt das 0,133-fache des Außendurchmessers des Zahnmischelements. Die Anzahl der Basisgeometrieperioden beträgt somit nb = 7,51. Die Anzahl der Nuten (2) beträgt 12 und die Steigung der Nuten beträgt das 9,59-fache des Außendurchmessers des Zahnmischelements.

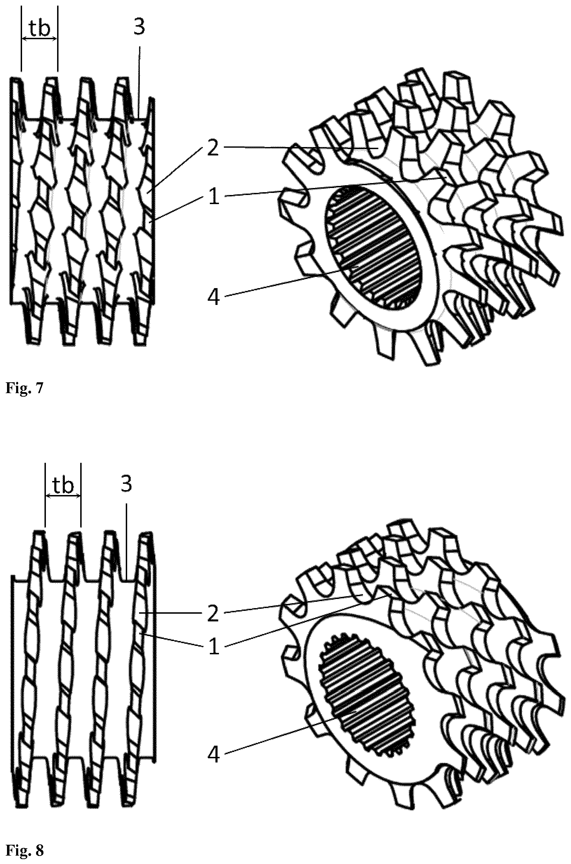

Figur 7 beschreibt ein Zahnmischelement mit den Zähnen (1), den Nuten (2), dem Schneckengang (3),der Innerverzahnung (4) und der Basisgeometrielänge tb. Der dimensionslose Außendurchmesser an den Spitzen der Zähne (1) beträgt 0,966. Der dimensionslose Kerndurchmesser im Grund des Schneckengangs (3) beträgt 0,664. Das dimensionslose Schneckenspiel beträgt 0,009. Die Steigung der Basisgeometrie beträgt das 0,133-fache des Außendurchmessers des Zahnmischelements. Die Anzahl der Basisgeometrieperioden beträgt somit nb = 7,51. Die Anzahl der Nuten (2) beträgt 12, die Steigung der Nuten beträgt das 3,2-fache des Außendurchmessers des Zahnmischelements und die Nuten reichen hinab bis zum Kerndurchmesser.

Figur 8 beschreibt ein neuartiges Zahnmischelement mit den Zähnen (1), den Nuten (2), dem Schneckengang (3),der Innerverzahnung (4) und der Basisgeometrielänge tb. Der dimensionslose Außendurchmesser an den Spitzen der Zähne (1) beträgt 0,991. Der dimensionslose Kerndurchmesser im Grund des Schneckengangs (3) beträgt 0,638. Das dimensionslose Schneckenspiel beträgt 0,009. Die Steigung der Basisgeometrie beträgt das 0,133-fache des Außendurchmessers des Zahnmischelements. Die Anzahl der Basisgeometrieperioden beträgt somit nb = 7,51. Die Anzahl der Nuten (2) beträgt 12 und die Steigung der Nuten beträgt das 3,2-fache des Außendurchmessers des Zahnmischelements.

Für die Schneckenprofile erfindungsgemäßer Mischelemente werden vorzugsweise Spiele zwischen den Schnecken im Bereich von 0,1 bis 0,001, bezogen auf den Außendurchmesser des Mischelements, verwendet, besonders bevorzugt 0,002 bis 0,05 und ganz besonders bevorzugt 0,004 bis 0,02. Die Spiele können, wie dem Fachmann bekannt ist, zwischen Schnecke und Gehäuse und zwischen Schnecke und Schnecke unterschiedlich groß oder gleich sein. Die Spiele können auch konstant oder, in den angegebenen Grenzen, variabel sein. Es ist auch möglich, innerhalb der Spiele ein Schneckenprofil zu verschieben. Mögliche Spielstrategien sind die in [1] auf den Seiten 28 ff beschriebene Möglichkeit der Achsabstand-Vergrößerung, der Längsschnitt-Äquidistanten und der Raumäquidistanten, die alle dem Fachmann bekannt sind. Bei der Achsabstand-Vergrößerung wird ein Schneckenprofil kleineren Durchmessers konstruiert und um den Betrag des Spiels zwischen den Schnecken auseinandergerückt. Bei der Methode der Längsschnitt-Äquidistanten wird die Längsschnitt-Profilkurve (parallel zur Achse) um das halbe Spiel Schnecke-Schnecke nach innen verschoben. Bei der Methode der Raumäquidistanten wird, ausgehend von der Raumkurve, auf der die Mischelemente sich abreinigen, das Mischelement in der Richtung senkrecht zu den Flächen des exakt abschabenden Profils um das Spiel zwischen Schnecke und Schnecke vergrößert. Bevorzugt wird die Längsschnitt-Äquidistante und die Raumäquidistante, besonders bevorzugt die Raumäquidistante verwendet.

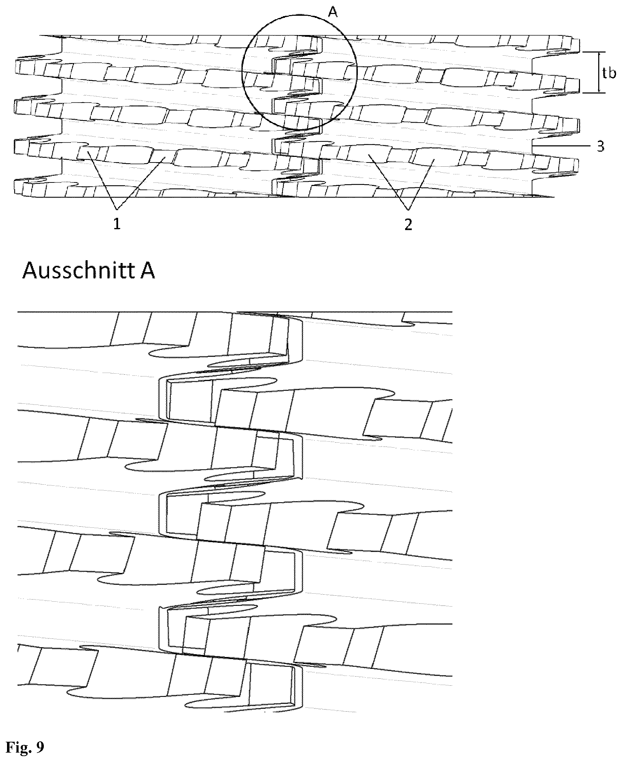

Figur 9 beschreibt ein Paar von erfindungsgemäßen Zahnmischelementen. Der dimensionslose Außendurchmesser an den Spitzen der Zähne (1) beträgt 0,966. Der dimensionslose Kerndurchmesser im Grund des Schneckengangs (3) beträgt 0,664. Das dimensionslose Schneckenspiel beträgt 0,009. Die Steigung der Basisgeometrie beträgt das 0,133-fache des Außendurchmessers des Zahnmischelements. Die Anzahl der Basisgeometrieperioden beträgt somit nb = 7,51. Die Anzahl der Nuten (2) beträgt 12 und die Steigung der Nuten beträgt das 7,99-fache des Außendurchmessers des Zahnmischelements. Als Spielstrategie wird die Achsabstand-Vergrößerung verwendet. Man erkennt, dass das Radialspiel zwischen den Schnecken wesentlich größer ist als das Axialspiel.

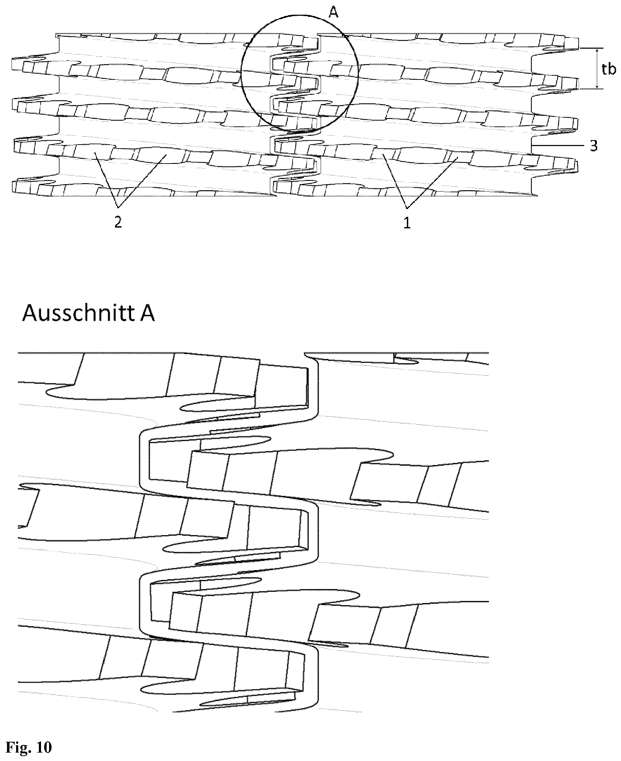

Figur 10 beschreibt ein Paar von erfindungsgemäßen Zahnmischelementen. Der dimensionslose Außendurchmesser an den Spitzen der Zähne (1) beträgt 0,966. Der dimensionslose Kerndurchmesser im Grund des Schneckengangs (3) beträgt 0,664. Das dimensionslose Schneckenspiel beträgt 0,009. Die Steigung der Basisgeometrie beträgt das 0,133-fache des Außendurchmessers des Zahnmischelements. Die Anzahl der Basisgeometrieperioden beträgt somit nb = 7,51. Die Anzahl der Nuten (2) beträgt 12 und die Steigung der Nuten beträgt das 7,99-fache des Außendurchmessers des Zahnmischelements. Als Spielstrategie wird die Raumäquidistante verwendet. Man erkennt, dass das Radialspiel und das Axialspiel zwischen den Schnecken im Wesentlichen gleich groß ist. Bevorzugt wird die für die erfindungsgemäßen Zahnmischelemente die Längsschnitt-Äquidistante, besonders bevorzugt die Raumäquidistante verwendet.

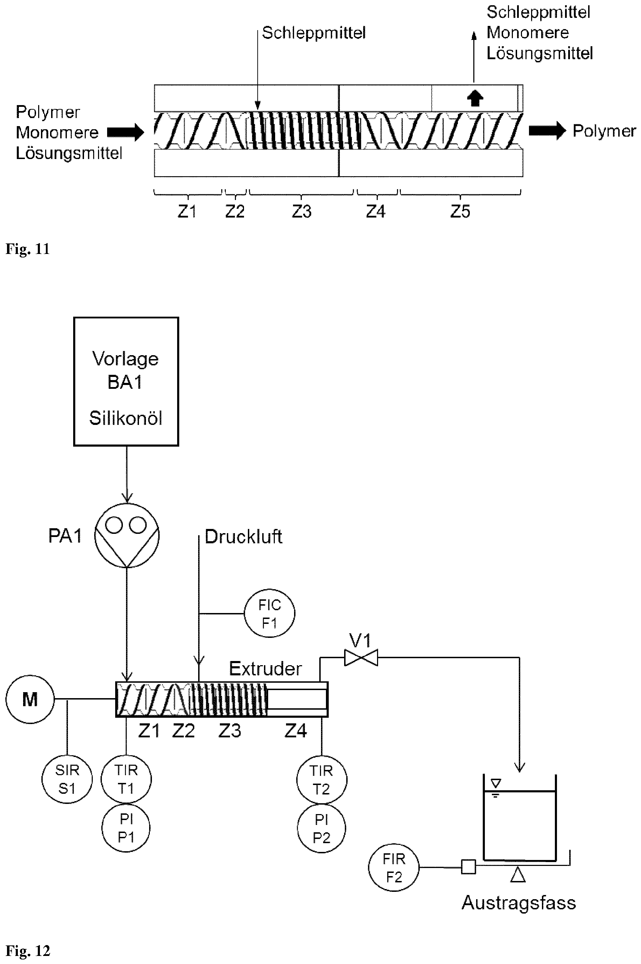

Figur 11 beschreibt eine typische Dispergierzone eines Entgasungs-Extruders. Eine Dispergierzone besteht im Wesentlichen aus 5 Zonen Z1 bis Z5. Der Zone Z1, die aus einem oder mehreren förderaktiven Förderelementen besteht, werden Polymere, Monomere und Lösungsmittel zugeführt. Die Zone Z1 hat die Aufgabe, den notwendigen Druck zum Überfahren der Zonen Z2 bis Z4 aufzubauen. Die Zone Z2 besteht aus einem oder mehreren druckverbrauchenden Schneckenelementen, bevorzugt aus einem oder mehreren neutralen oder rückfördernden Knetelementen, besonders bevorzugt aus einem oder mehreren rückfördernden Förderelementen. Durch den Druckverbrauch in der Zone Z2 wird verhindert, dass Schleppmittel, welches in der Zone Z3 zugeführt wird, nach stromauf entweichen kann. Als Schleppmittel wird bevorzugt Luft, Kohlendioxid oder Wasser und besonders bevorzugt Stickstoff verwendet. Das Schleppmittel wird zu Beginn der Zone Z3 zudosiert. Die Zone Z3 besteht aus einem oder mehreren Dispergierschneckenelementen, bevorzugt aus einem oder mehreren Knet- und Mischelementen und besonders bevorzugt aus einem oder mehreren Zahnmischelementen. Die Dispergierzone hat die Aufgabe, dass Schleppmittel möglichst fein zu dispergieren. Die Zone Z4 besteht aus einem oder mehreren druckverbrauchenden Schneckenelement, bevorzugt aus einem oder mehreren neutralen oder rückfördernden Knetelementen, besonders bevorzugt aus einem oder mehreren rückfördernden Förderelementen. Die Zone Z4 hat die Aufgabe, den Druck in der Dispergierzone Z3 auf einem gewünschten Druckniveau einzustellen. Als letzte Zone Z5 folgt eine teilgefüllte Entgasungszone, in der die Monomere und Lösungsmittel mit Unterstützung des Schleppmittels über einen Entgasungsdom aus dem Extruder abgeführt werden, während das Polymer im Extruder stromab weitertransportiert wird. Die Zone Z5 besteht aus einem oder mehreren förderaktiven Schneckenelementen, bevorzugt aus einem oder mehreren förderaktiven Förderelementen. Die Dispergierung von Gasen wird möglichst unter hohem Druck durchgeführt, damit sich das Schleppmittel besser im Polymer löst und damit in einer nachfolgenden Entgasungszone ein besseres Aufschäumen (größere Oberfläche) möglich ist.

Figur 12 beschreibt einen Zweiwellenextruder aus Plexiglas, in dem Versuche zur visuellen Beurteilung der Gasdispergierungseffektivität von verschiedenen Mischelementen durchgeführt werden können. Der Gehäuseinnendurchmesser des Plexiglasextruders beträgt 58,3 mm, der Achsabstand zwischen den beiden Wellen beträgt 48 mm. Anstelle von Polymerschmelze wird in diesen Versuchen Silikonöl verwendet, da Silikonöl bei Raumtemperatur wie Polycarbonat bei 300 - 350°C ein Newtonsches Fließverhalten aufweist. Aus einer Vorlage BA1 wird Silikonöl mit einer Viskosität von 10 Pas bei Raumtemperatur mittels einer Zahnradpumpe PA1 in den Extruder gepumpt. Am Beginn der Dispergierschneckenelemente wird Stickstoff in den Extruder dosiert, dessen Massenstrom über die Messstelle F1 gemessen wird. Über ein Ventil V1 kann der Druck im Extruder eingestellt werden. Nach dem Ventil V1 wird das Silikonöl in einem Austragsfass aufgefangen. Der Extruder wird über den Motor M angetrieben und die Extruderdrehzahl S1 wird gemessen. Ferner werden die Drücke P1 und P2 am Eintritt und am Austritt sowie die Temperaturen T1 und T2 am Eintritt und am Austritt gemessen. Der Massenstrom F2 an Silikonöl wird über eine Waage erfasst. Der Schneckenbesatz für die Dispergierversuche besteht in einer ersten Zone Z1 aus förderaktiven Förderelementen mit einer Steigung von 60 mm, in einer zweiten Zone Z2 aus rückfördernden Förderelementen mit einer Steigung von 60 mm und einer Länge von 30 mm, in einer dritten Z3 aus den Dispergierschneckenelementen und in einer vierten Zone Z4 aus Distanzhülsen.

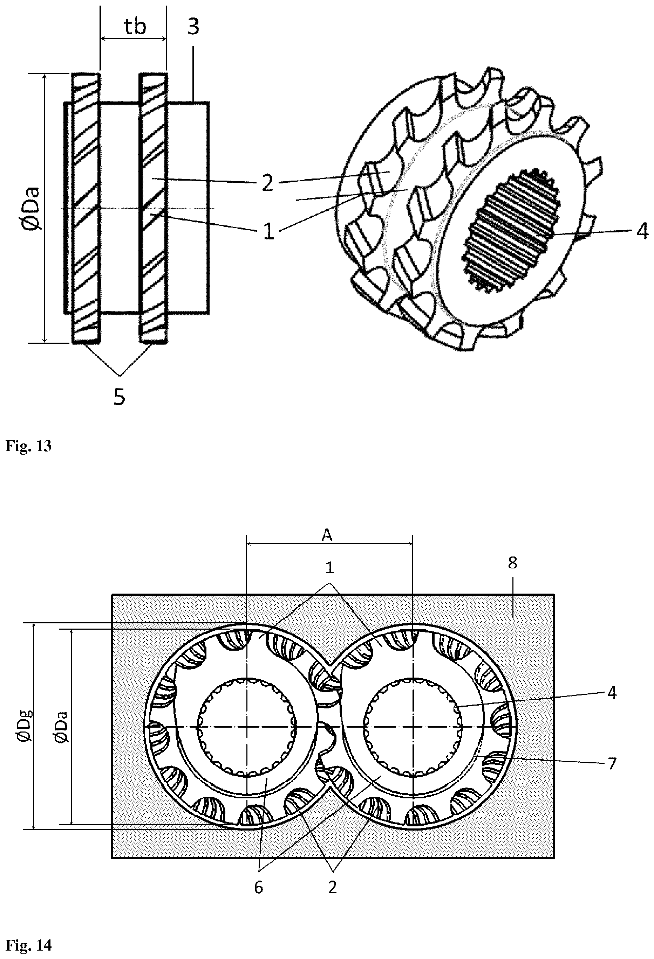

Figur 13 zeigt ein Mischelement vom TME-Typ gemäß dem Stand der Technik mit den Ringen (5), den Zähnen (1), den Nuten (2), dem Schneckengang (3), der Innerverzahnung (4), der Basisgeometrielänge tb und dem Außendurchmesser Da.

Figur 14 beschreibt ein Paar von neuartigen Zahnmischelementen (6) mit dem Außendurchmesser Da, dem Kerndurchmesser (7), den Zähnen (1), den Nuten (2), der Innerverzahnung (4) in einem Gehäuse (8) eines Zweiwellenextruders mit einem Gehäuseinnendurchmesser Dg. Der Achsabstand zwischen den beiden Zahnmischelementen ist gleich A. Die Anzahl der Nuten (2) beträgt 12.

Die folgenden Beispiele dienen der weiteren Erläuterung der Erfindung und sind nicht als Einschränkung zu sehen.

### Beispiele

Beispiel 1: Als Dispergierschneckenelemente wurden Mischelemente mit einem zweigängigen förderaktiven Förderelement als Basisgeometrie und rückfördernden Nuten nach dem Stand der Technik eingesetzt. Diese Mischelemente sind dem Fachmann auch als Schneckenmischelemente (SME) bekannt. Der Außendurchmesser an den Spitzen der Zähne betrug 56,6 mm für eine axiale Länge von 150 mm. Die Basisgeometrieperiodenlänge tb betrug 30 mm. Die Anzahl der Basisgeometrieperioden betrug somit nb = 1,89. Die Anzahl der Nuten betrug 8 und die Steigung der Nuten betrug 120 mm entsprechend dem 2,12-fachen des Außendurchmessers des Zahnmischelements. Der Druck an der Messstelle P1 betrug 5,5 bar absolut. Die Drehzahl des Extruders betrug 18 Umdrehungen pro Minute. Der Massenstrom an Silikonöl betrug 22 kg/h. Es wurden 10 NL/h (Normliter / h) Stickstoff dosiert. Der Stickstoff wurde über eine Dosierstelle dosiert. Der zudosierte Stickstoff war bereits an der Dosierstelle über den ganzen Querschnitt verteilt, da unerwünschter Weise der Stickstoff dem Druckgradienten eines förderaktiven Schneckenmischelements folgend teilweise rückwärts gefördert wurde. Nach einer axialen Länge von etwa 120 mm waren häufig langgezogene Gasblasen mit einem Durchmesser von größer 10 mm vorhanden.
Beispiel 2: Als Dispergierschneckenelemente wurden Zahnmischelemente nach dem Stand der Technik eingesetzt. Der Außendurchmesser an den Spitzen der Zähne betrug 56,3 mm für eine axiale Länge von 150 mm. Die Basisgeometrieperiodenlänge tb betrug 15 mm. Die Anzahl der Basisgeometrieperioden betrug somit nb = 3,75. Die Anzahl der Nuten betrug 12 und die Steigung der Nuten betrug 180 mm entsprechend dem 3,20-fachen des Außendurchmessers des Zahnmischelements. Der Druck an der Messstelle P1 betrug 5,5 bar absolut. Die Drehzahl des Extruders betrug 18 Umdrehungen pro Minute. Der Massenstrom an Silikonöl betrug 18 kg/h. Es wurden 10 NL/h (Normliter / h) Stickstoff dosiert. Der Stickstoff wurde über zwei Dosierstellen dosiert und zwar in Drehrichtung der beiden Wellen jeweils etwa 45° vor dem Zwickel. Der zudosierte Stickstoff wurde in einer axialen Länge von etwa 60 mm vorverteilt. Nach einer axialen Länge von etwa 120 mm waren häufig langgezogene Gasblasen mit einem Durchmesser von etwa 5 mm vorhanden.
Beispiel 3: Als Dispergierschneckenelemente wurden Zahnmischelemente eingesetzt, wobei der Außendurchmesser an den Spitzen der Zähne 57,8 mm für eine axiale Länge von 60 mm betrug, danach betrug der Außendurchmesser 56,3 mm für eine axiale Länge von 90 mm. Die Basisgeometrieperiodenlänge tb betrug 10 mm. Die Anzahl der Basisgeometrieperioden betrug somit nb = 5,78 bzw. 5,63. Die Anzahl der Nuten betrug 12 und die Steigung der Nuten betrug 180 mm entsprechend dem 3,11-fachen bzw. 3,20-fachen des Außendurchmessers des Zahnmischelements. Der Druck an der Messstelle P1 betrug 5,5 bar absolut. Die Drehzahl des Extruders betrug 18 Umdrehungen pro Minute. Der Massenstrom an Silikonöl betrug 18 kg/h. Es wurden 10 NL/h (Normliter / h) Stickstoff dosiert. Der Stickstoff wurde über zwei Dosierstellen dosiert und zwar in Drehrichtung der beiden Wellen jeweils etwa 45° vor dem Zwickel. Der zudosierte Stickstoff wurde in einer axialen Länge von etwa 30 mm vorverteilt. Nach einer axialen Länge von etwa 120 mm waren häufig langgezogene Gasblasen mit einem Durchmesser von etwa 3 mm vorhanden.
Beispiel 4: Als Dispergierschneckenelemente wurden Zahnmischelemente eingesetzt, bei denen der Außendurchmesser an den Spitzen der Zähne 57,8 mm für eine axiale Länge von 60 mm betrug, danach betrug der Außendurchmesser 56,3 mm für eine axiale Länge von 90 mm. Die Basisgeometrieperiodenlänge tb betrug 7,5 mm. Die Anzahl der Basisgeometrieperioden betrug somit nb = 7,71 bzw. 7,51. Die Anzahl der Nuten betrug 12 und die Steigung der Nuten betrug 180 mm entsprechend dem 3,11-fachen bzw. 3,20-fachen des Außendurchmessers des Zahnmischelements. Der Druck an der Messstelle P1 betrug 5,5 bar absolut. Die Drehzahl des Extruders betrug 18 Umdrehungen pro Minute. Der Massenstrom an Silikonöl betrug 18 kg/h. Es wurden 10 NL/h (Normliter / h) Stickstoff dosiert. Der Stickstoff wurde über zwei Dosierstellen dosiert und zwar in Drehrichtung der beiden Wellen jeweils etwa 45° vor dem Zwickel. Der zudosierte Stickstoff wurde in einer axialen Länge von etwa 25 mm vorverteilt. Nach einer axialen Länge von etwa 120 mm waren häufig langgezogene Gasblasen mit einem Durchmesser von etwa 2,5 mm vorhanden.
Beispiel 5: Als Dispergierschneckenelemente wurden erfindungsgemäße Zahnmischelemente eingesetzt. Der Außendurchmesser an den Spitzen der Zähne betrug 57,8 mm für eine axiale Länge von 60 mm, danach betrug der Außendurchmesser 56,3 mm für eine axiale Länge von 90 mm. Die Basisgeometrieperiodenlänge tb betrug 7,5 mm. Die Anzahl der Basisgeometrieperioden betrug somit nb = 7,71 bzw. 7,51. Die Anzahl der Nuten betrug 12 und die Steigung der Nuten betrug 450 mm entsprechend dem 7,79-fachen bzw. 7,99-fachen des Außendurchmessers des Zahnmischelements. Der Druck an der Messstelle P1 betrug 5,5 bar absolut. Die Drehzahl des Extruders betrug 18 Umdrehungen pro Minute. Der Massenstrom an Silikonöl betrug 18 kg/h. Es wurden 10 NL/h (Normliter / h) Stickstoff dosiert. Der Stickstoff wurde über zwei Dosierstellen dosiert und zwar in Drehrichtung der beiden Wellen jeweils etwa 45° vor dem Zwickel. Der zudosierte Stickstoff wurde in einer axialen Länge von etwa 30 mm vorverteilt. Nach einer axialen Länge von etwa 120 mm waren häufig langgezogene Gasblasen mit einem Durchmesser von etwa 2,5 mm vorhanden.

Der dimensionslose Eigendurchsatz A1 von verschiedenen Zahnmischelementen wurde mit Hilfe der Strömungssimulation berechnet. Es wurde das kommerzielle Softwarepaket Ansys Fluent in der Version 13.0 verwendet.

Die Berechnungen erfolgten unter isothermen Bedingungen. Das Mischelement war vollständig mit Produkt gefüllt. Die Viskosität und die Dichte wurden so gewählt, dass eine schleichende Strömung vorlag, also die Reynoldszahl Re wesentlich kleiner als 1 war. Um Ein- und Auslaufeffekte aus dem Mischelement in den Rechenergebnissen auszuschließen, wurde in Axialrichtung mit periodischen Randbedingungen gerechnet.

Der dimensionslose Außendurchmesser an den Spitzen der Zähne betrug 0,983. Der dimensionslose Kerndurchmesser im Grund des Schneckengangs betrug 0,627. Das dimensionslose Schneckenspiel betrug 0,011. Die Steigung der Basisgeometrie betrug das 0,132-fache des Außendurchmessers des Zahnmischelements. Die Anzahl der Basisgeometrieperioden betrug somit nb = 7,59. Als Spielstrategie wurde die Raumäquidistante verwendet. Die Anzahl der Nuten betrug 12. Die Steigung der Nuten wurde variiert.

In einer 1. Geometrievariante betrug die Steigung der Nuten das 4,75-fache des Außendurchmessers des Zahnmischelements. Der dimensionslose Eigendurchsatz dieser Variante beträgt A1 = 0,0317.

In einer 2. Geometrievariante betrug die Steigung der Nuten das 5,42-fache des Außendurchmessers des Zahnmischelements. Der dimensionslose Eigendurchsatz dieser Variante beträgt A1 = 0,0292.

In einer 3. Geometrievariante betrug die Steigung der Nuten das 5,69-fache des Außendurchmessers des Zahnmischelements. Der dimensionslose Eigendurchsatz dieser Variante beträgt A1 = 0,0280.

In einer 4. Geometrievariante betrug die Steigung der Nuten das 6,33-fache des Außendurchmessers des Zahnmischelements. Der dimensionslose Eigendurchsatz dieser Variante beträgt A1 = 0,0253.

In einer 5. Geometrievariante betrug die Steigung der Nuten das 7,12-fache des Außendurchmessers des Zahnmischelements. Der dimensionslose Eigendurchsatz dieser Variante beträgt A1 = 0,0222.

In einer 6. Geometrievariante betrug die Steigung der Nuten das 7,59-fache des Außendurchmessers des Zahnmischelements. Der dimensionslose Eigendurchsatz dieser Variante beträgt A1 = 0,0205.

In einer 7. Geometrievariante betrug die Steigung der Nuten das 9,49-fache des Außendurchmessers des Zahnmischelements. Der dimensionslose Eigendurchsatz dieser Variante beträgt A1 = 0,0145.

Der Energiebedarf beim Durchströmen der verschiedenen Zahnmischelemente bleibt praktisch konstant. Er unterscheidet sich maximal um 1%.

Wie in [2] beschrieben wird, liegen typische dimensionslose Durchsätze eines Entgasungsextruders im Bereich von Q = 0,03 - 0,06. Wird der Schneckenextruder mit einem dimensionslosen Durchsatz von Q = 0,03 gefahren, so wird erst mit der 5. Geometrievariante (d.h. nur bei den erfindungsgemäßen Varianten) ein dimensionsloser Eigendurchsatz von A1 = 0,0222 erreicht, der kleiner als 80% des dimensionslosen Durchsatzes Q ist. Wird der Schneckenextruder mit einem dimensionslosen Durchsatz von Q = 0,03 gefahren, so wird erst mit der 7. Geometrievariante ein dimensionsloser Eigendurchsatz von A1 = 0,0145 erreicht, der kleiner als 60% des dimensionslosen Durchsatzes Q ist.

## Patentansprüche

1. Mischelemente für mehrwellige Schneckenextruder mit paarweise gleichsinnig drehenden Schneckenwellen, wobei die Anzahl der Basisgeometrieperioden in einem Längenabschnitt des Mischelements, welcher der Länge nach dem Außendurchmesser der Mischelemente entspricht, größer oder gleich 5,5 ist,
**dadurch gekennzeichnet, dass** die Mischelemente als Basisgeometrie ein rückförderndes Förderelement mit einem eingängigen Schneckenprofil nach Erdmenger aufweisen, dessen Kämme mit förderaktiven Nuten versehen sind und die Steigung der fördernden Nuten mindestens das 7-fache des Außendurchmessers der Mischelemente beträgt.

2. Mischelemente nach Anspruch 1, **dadurch gekennzeichnet, dass** die Anzahl der Basisgeometrieperioden in einem Längenabschnitt, welcher der Länge nach dem Außendurchmesser der Mischelemente entspricht, größer oder gleich 5,5 und kleiner oder gleich 10 ist.

3. Mischelemente nach Anspruch 1 oder 2, **dadurch gekennzeichnet, dass** die Anzahl der Basisgeometrieperioden in einem Längenabschnitt, welcher der Länge nach dem Außendurchmesser der Mischelemente entspricht, größer oder gleich 7 ist.

4. Mischelemente nach einem der Ansprüche 1 bis 3, **dadurch gekennzeichnet, dass** die Steigung der fördernden Nuten mindestens das 9-fache des Außendurchmessers der Mischelemente beträgt.

5. Verwendung von Mischelementen nach einem der Ansprüche 1 bis 4 in einem mehrwelligen Schneckenextruder mit paarweise gleichsinnig drehenden Schneckenwellen.

6. Mehrwelliger Schneckenextruder mit paarweise gleichsinnig drehenden Schneckenwellen , wobei die Schneckenwellen die folgende Abfolge an Schneckenelementen als Dispergierzone aufweisen:
(i) förderaktive Schneckenelemente,
(iii) Mischelemente nach einem der Ansprüche 1 bis 4,
(v) förderaktive Schneckenelemente.

7. Schneckenextruder nach Anspruch 6, **dadurch gekennzeichnet, dass** die Schneckenwellen die folgende Abfolge an Schneckenelementen als Dispergierzone umfassen:
(i) förderaktive Schneckenelemente,
(ii) wenigstens ein rückförderndes Schneckenelement,
(iii) die Mischelemente nach einem der Ansprüche 1 bis 4,
(iv) wenigstens ein rückförderndes Schneckenelement,
(v) förderaktive Schneckenelemente.

8. Schneckenextruder nach Anspruch 6 oder 7, **dadurch gekennzeichnet, dass** der Schneckenextruder 1 bis 8, bevorzugt 1 bis 6, besonders bevorzugt 1 bis 4 der Dispergierzonen enthält.

9. Schneckenextruder nach Anspruch 6 oder 7, **dadurch gekennzeichnet, dass** die Mischelemente (iii) einen geringeren Außendurchmesser aufweisen als wenigstens eines der Schneckenelemente (i) und (ii) und einen geringeren Außendurchmesser aufweisen als wenigstens eines der Schneckenelemente (iv) und (v).

10. Schneckenextruder nach einem der Ansprüche 6 bis 9, **dadurch gekennzeichnet, dass** der Eigendurchsatz A1 der Mischelemente (iii) höchstens das 0,8 fache des dimensionslosen Volumenstroms Q beträgt.

11. Schneckenextruder nach einem der Ansprüche 6 bis 10, **dadurch gekennzeichnet, dass** der Eigendurchsatz A1 der Mischelemente (iii) höchstens das 0,6 fache des dimensionslosen Volumenstroms Q beträgt.

12. Verfahren zur Extrusion plastischer Massen in einem Schneckenextruder nach einem der Ansprüche 6 bis 11.

13. Verfahren nach Anspruch 12, **dadurch gekennzeichnet, dass** die Mischelemente (iii) zum Dispergieren von gasförmigen, flüssigen oder pulverförmigen Additiven verwendet werden.

14. Verfahren nach Anspruch 12 oder 13, **dadurch gekennzeichnet, dass** die plastischen Massen Thermoplaste oder Elastomere sind.

15. Verfahren nach Anspruch 14, **dadurch gekennzeichnet, dass** als Thermoplast ein (Co-)-polycarbonat oder ein Blend enthaltend wenigstens ein (Co-)polycarbonat eingesetzt wird.

## Claims

1. Mixing elements for multi-shaft screw extruders comprising screw shafts that co-rotate in pairs, wherein the number of base geometry periods in a longitudinal section of the mixing element that corresponds lengthwise to the outer diameter of the mixing elements is greater than or equal to 5.5,
**characterized in that** the base geometry of the mixing elements is that of a reverse-conveying feeding element with a single-thread screw Erdmenger profile, the combs of which are provided with active-conveying grooves, and the pitch of the conveying grooves is at least 7 times the outer diameter of the mixing elements.

2. Mixing elements according to Claim 1,
**characterized in that** the number of base geometry periods in a longitudinal section that corresponds lengthwise to the outer diameter of the mixing elements is greater than or equal to 5.5 and less than or equal to 10.

3. Mixing elements according to Claim 1 or 2,
**characterized in that** the number of base geometry periods in a longitudinal section that corresponds lengthwise to the outer diameter of the mixing elements is greater than or equal to 7.

4. Mixing elements according to one of Claims 1 to 3,
**characterized in that** the pitch of the conveying grooves is at least 9 times the outer diameter of the mixing elements.

5. Use of mixing elements according to one of Claims 1 to 4 in a multi-shaft screw extruder comprising screw shafts that co-rotate in pairs.

6. Multi-shaft screw extruder comprising screw shafts that co-rotate in pairs, wherein the screw shafts have the following sequence of screw elements as a dispersion zone:
(i) active-conveying screw elements,
(iii) mixing elements according to one of Claims 1 to 4, and
(v) active-conveying screw elements.

7. Screw extruder according to Claim 6, **characterized in that** the screw shafts comprise the following sequence of screw elements as a dispersion zone:
(i) active-conveying screw elements,
(ii) at least one reverse-conveying screw element,
(iii) the mixing elements according to one of Claims 1 to 4,
(iv) at least one reverse-conveying screw element, and
(v) active-conveying screw elements.

8. Screw extruder according to Claim 6 or 7,
**characterized in that** the screw extruder contains 1 to 8, preferably 1 to 6, and particularly preferably 1 to 4 dispersion zones.

9. Screw extruder according to Claim 6 or 7,
**characterized in that** the mixing elements (iii) have a smaller outer diameter than at least one of the screw elements (i) and (ii) and have a smaller outer diameter than at least one of the screw elements (iv) and (v).

10. Screw extruder according to one of Claims 6 to 9,
**characterized in that** the intrinsic throughput A1 of the mixing elements (iii) is a maximum of 0.8 times the dimensionless volume flow Q.

11. Screw extruder according to one of Claims 6 to 10,
**characterized in that** the intrinsic throughput A1 of the mixing elements (iii) is a maximum of 0.6 times the dimensionless volume flow Q.

12. Method for extruding plastic masses in a screw extruder according to one of Claims 6 to 11.

13. Method according to Claim 12, **characterized in that** the mixing elements (iii) are used for the dispersion of gaseous, liquid, or powdered additives.

14. Method according to Claim 12 or 13, **characterized in that** the plastic masses are thermoplastics or elastomers.

15. Method according to Claim 14, **characterized in that** a (co)polycarbonate or a blend comprising at least one (co)polycarbonate is used as a thermoplastic.

## Revendications

1. Éléments de mélange pour extrudeuses à vis à plusieurs arbres présentant des arbres de vis tournant deux à deux dans le même sens, le nombre des périodes géométriques de base dans une section de la longueur de l'élément du mélange dont la longueur correspond au diamètre extérieur des éléments de mélange étant supérieur ou égal à 5,5,
**caractérisés en ce que**
les éléments de mélange présentent comme géométrie de base un élément de refoulement vers l'arrière doté d'un profil hélicoldal à un pas selon Erdmenger dont les dents sont dotées de rainures actives en transport et **en ce que** le pas des rainures de transport représente au moins 7 fois le diamètre extérieur des éléments de mélange.

2. Éléments de mélange selon la revendication 1,
**caractérisés en ce que** le nombre des périodes géométriques de base dans une section de la longueur dont la longueur correspond au diamètre extérieur des éléments de mélange est supérieur ou égal à 5,5 et inférieur ou égal à 10.

3. Éléments de mélange selon les revendications 1 ou 2, **caractérisés en ce que** le nombre des périodes géométriques de base dans une section de la longueur dont la longueur correspond au diamètre extérieur des éléments de mélange est supérieur ou égal à 7.

4. Éléments de mélange selon l'une des revendications 1 à 3, **caractérisés en ce que** le pas des rainures de transport représente au moins 9 fois le diamètre extérieur des éléments de mélange.

5. Utilisation d'éléments de mélange selon l'une des revendications 1 à 4 dans une extrudeuse à vis à plusieurs arbres dont les arbres de vis tournent deux à deux dans le même sens.

6. Extrudeuse à vis à plusieurs arbres présentant des arbres de vis tournant deux à deux dans le même sens, les arbres de vis présentant comme zone de dispersion la succession suivante d'éléments hélicoidaux:
(i) des éléments hélicoïdaux actifs en transport,
(iii) des éléments de mélange selon l'une des revendications 1 à 4 et
(v) des éléments hélicoidaux actifs en transport.

7. Extrudeuse à vis selon la revendication 6, **caractérisée en ce que** les arbres de vis présentent comme zone de dispersion la succession suivante d'éléments hélicoidaux :
(i) des éléments hélicoidaux actifs en transport,
(ii) au moins un élément hélicoidal refoulant vers l'arrière,
(iii) des éléments de mélange selon l'une des revendications 1 à 4
(iv) au moins un élément hélicoidal refoulant vers l'arrière et
(v) des éléments hélicoïdaux actifs en transport.

8. Extrudeuse à vis selon les revendications 6 ou 7,
**caractérisée en ce que** l'extrudeuse à vis contient de 1 à 8, de préférence de 1 à 6 et de façon particulièrement préférable de 1 à 4 zones de dispersion.

9. Extrudeuse à vis selon les revendications 6 ou 7,
**caractérisée en ce que** les éléments de mélange (iii) présentent un diamètre extérieur plus petit qu'au moins l'un des éléments hélicoïdaux (i) et (ii) et un diamètre extérieur plus petit qu'au moins l'un des éléments hélicoïdaux (iv) et (v).

10. Extrudeuse à vis selon l'une des revendications 6 à 9, **caractérisés en ce que** le débit propre A1 des éléments de mélange (iii) représente au plus 0,8 fois le débit volumique sans dimension Q.

11. Extrudeuse à vis selon l'une des revendications 6 à 10, **caractérisée en ce que** le débit propre A1 des éléments de mélange (iii) représente au plus 0,6 fois le débit volumique sans dimension Q.

12. Procédé d'extrusion de pâtes plastiques dans une extrudeuse à vis selon l'une des revendications 6 à 11.

13. Procédé selon la revendication 12, **caractérisé en ce que** les éléments de mélange (iii) sont utilisés pour disperser des additifs gazeux, liquides ou poudreux.

14. Procédé selon les revendications 12 ou 13,
**caractérisés en ce que** les pâtes plastiques sont des thermoplastiques ou des élastomères.

15. Procédé selon la revendication 14, **caractérisés en ce que** comme thermoplastiques un (co-)-polycarbonate ou un mélange contenant au moins un (co-)-polycarbonate).
